# EUROPEAN PATENT SPECIFICATION

(11) **EP 3 934 493 B1**
(45) Date of publication and mention of the grant of the patent: **04.01.2023**
(21) Application number: 20778614.6
(22) Date of filing: 18.03.2020
(51) Int. Cl.: A47J 42/40, A47J 31/42

(54) **A COFFEE GRINDING DEVICE AND A COFFEE MACHINE HAVING SAID DEVICE**
KAFFEEMÜHLE UND KAFFEEMASCHINE MIT DIESER MÜHLE
DISPOSITIF POUR MOUDRE LE CAFÉ ET MACHINE À CAFÉ ÉQUIPÉE DUDIT DISPOSITIF

(30) Priority: 26.03.2019 TR 201904491
(43) Date of publication of application: 12.01.2022
(73) Proprietor: Mastas Makina Kalip Sanayi Ve Ticaret Anonim Sirketi, Nilüfer/Bursa (TR); Unal, Altug, Nilüfer/Bursa (TR)
(72) Inventor: ÜNAL, Altug, Nilüfer/Bursa (TR)
(86) International application number: PCT/TR2020/050217
(87) International publication number: WO 2020/197521

(56) References cited:
- EP-A2- 2 364 624
- WO-A1-2014/026485
- WO-A1-2018/211264
- WO-A1-2019/031964
- GB-A- 952 241
- TR-A2- 201 810 667
- US-A- 6 149 084
- US-A1- 2018 055 289
- US-A1- 2018 325 303

## Description

### TECHNICAL FIELD

The invention is related to a device that is used to prepare a beverage from powder formed ingredients.

The invention is particularly related to a particle carrier system that prevents the immobility or sticking of the particles onto the surface over which they are being carried and a Turkish coffee preparation device provided with said coffee grinder.

### PRIOR ART

Coffee is one of the most preferred hot beverages nowadays, and it is consumed after being prepared with several different brewing methods. Said different types of coffee are generally prepared from coffee beans that have been ground to have different particle sizes. One of the coffee types mentioned is Turkish coffee. In order for Turkish coffee to be prepared to have the desired consistency, the coffee beans need to be finely ground. 70 to 75% of the ground particles need to have a size, approximately between 75-125 microns.

Although it is crucial to have this ratio for the coffee to have the desired taste, it leads to a significant problem during the delivery of the coffee into the container in which it is to be cooked. When the coffee particles are ground to the size that is mentioned, they tend to stick to each other, or onto the surface over which they are being carried. The steam that is created during the cooking of the coffee increases such a trend.

The sticking and/or agglomeration of coffee during delivery may, not only clog the route that it is being carried through but the coffee particle remnants that are created may go stale after some time and this may affect the aroma of the coffee.

The solution that is tried to be provided regarding this issue has been disclosed in the document numbered EP3049771 (A1) via an arrangement for transporting flow of ground powder. The spring elements that have been connected to a container that has been provided conically provide vibration and they move the powder granules that are present inside the container. Similarly, a structure directed to regulating flow, by means of attaching vibration elements to a silo apparatus, has been described in the document numbered DE4120201 (A1).

In the document numbered US2016263539 (A1), a mechanism arranged for protein beverages has been disclosed. In the mechanism mentioned different types of protein powders can be selected to prepare a beverage. The beverage powder selected is moved by means of an oscillation motor in order to prevent agglomeration due to humidity or other similar factors.

In the document numbered US2016263539 (A1) another type of protein beverage preparation device has been disclosed. When the powder is mixed with a liquid in the system, the container containing the mixture is vibrated by means of a motor.

Document GB 952 241 A discloses a coffee grinder comprising a grinding mechanism having a grinder outlet, a flow channel that directs the ground coffee particles conveyed from the outlet of the grinder in order to transfer them to a container, and its inlet positioned right below the grinder outlet and connected to the grinder, and a motion control motor that laterally vibrates said flow channel in a suitable amount and frequency in order to prevent the sticking of the ground coffee particles located in the flow channel to said flow channel.

The oscillation motors used for ensuring regular flow, causes the mechanica components of the devices to be damaged in the medium and long term and the usage lives of the devices are reduced.

As a result, all of the problems mentioned above, have necessitated a novelty to be carried out in the related art.

### AIM OF THE INVENTION

The present invention aims to eliminate the problems mentioned above and to provide a novelty in the related art.

The main aim of the invention is to convey a coffee preparation device having a particle carriage system that prevents the immobility or sticking of particularly, the particles that are smaller than 150 microns, onto the surface over which they are being carried.

Another aim of the invention is to particularly prevent the sticking of coffee particles that accumulate around the dispensing opening and to ensure that the opening is kept clean.

Another aim of the invention is to eliminate the requirement for uncontrolled vibration and therefore to increase the usage lives of coffee preparation and grinding devices.

### BRIEF DESCRIPTION OF THE INVENTION

The present invention is related to a coffee grinder comprising a grinding mechanism that has at least a grinding outlet, for grinding coffee in order to reach all of the aims that shall be construed from the information given above and the detailed description below. Accordingly, the invention comprises at least a flow channel that directs the ground coffee particles conveyed from the outlet of the grinder in order to transfer them to a container, and its inlet positioned right below the grinder outlet and connected to the grinder such that it can rotate according to the channel inlet axis that passes through the center of said inlet, and a motion control motor that successively moves said flow channel at the inlet axis in opposite radial directions in a suitable amount and frequency in order to prevent the sticking of the ground coffee particles located in the flow channel, to said flow channel.

A preferred embodiment of the invention comprises a control unit in order to control at least one of the factors such as movement speed, frequency, acceleration and motion distance of said motion control motor.

A preferred embodiment of the invention comprises an input unit in order to determine at least one of the factors such as movement speed, frequency, acceleration and motion distance of said motion control motor.

In a preferred embodiment of the invention, said motion control motor is a servo motor. In a preferred embodiment of the invention, said motion control motor is a stepper motor.

In a preferred embodiment of the invention, said motion control motor is a DC motor with an encoder.

A preferred embodiment of the invention comprises a flow channel gear provided to rotate according to the inlet axis, such that it is fixedly connected to the flow channel and a transfer element that transfers the rotation motion provided by the motion control motor to the flow channel gear.

In a preferred embodiment of the invention, at least a part of said flow channel is provided in an angular form.

In a preferred embodiment of the invention, at least a part of said flow channel is provided in an inclined form.

Another preferred embodiment of the invention, comprises a cleaning surface that is positioned to be in contact with the outlet of said flow channel and provided to be coplanar with said outlet.

According to another preferred embodiment of the invention, said cleaning surface has been formed to close the outlet of the flow channel to the flow channel.

According to another preferred embodiment of the invention, said motion control motor and flow channel have been configured to allow the outlet of the flow channel to be in contact with the cleaning surface.

The present invention is a coffee machine that has been developed out in order to reach all of the aims that can be construed from the information above and the detailed description below, comprising a coffee grinder according to any of the claims 1-11, a water tank, at least a water outlet configured to feed the container in which the coffee particles that have been conveyed from the grinder and the water transferred from the water tank are collected, and a heating element that heats up the container in order to prepare the coffee.

A preferred embodiment of the invention comprises at least a secondary chamber in order to feed a secondary component to the inlet of said flow channel having a secondary chamber outlet.

A preferred embodiment of the invention comprises an intermediate channel located between said outlet and the flow channel, provided to rotate together with the flow channel, and an extension at the outer surface of the intermediate channel that comes in contact with the secondary chamber outlet during the rotation of the flow channel in order to clean the components remaining at the outlet area of the secondary chamber. A preferred embodiment of the invention comprises at least two containers and it has been configured such that the motion control motor can move the flow channel outlet between said containers.

### BRIEF DESCRIPTION OF THE FIGURES

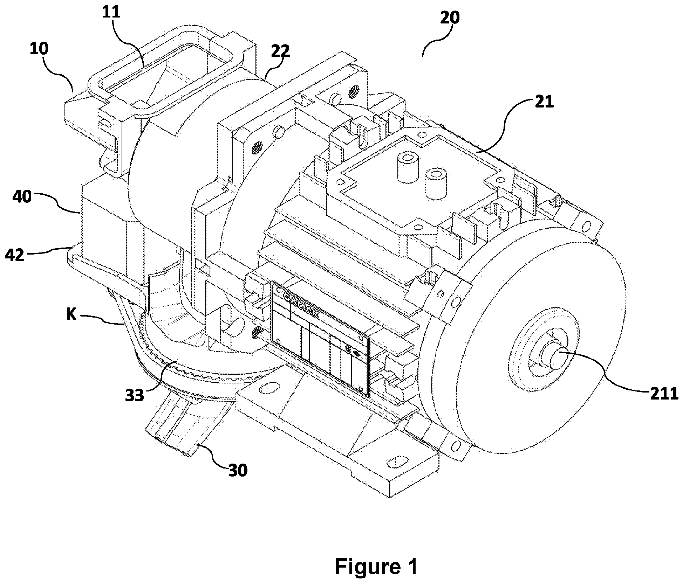

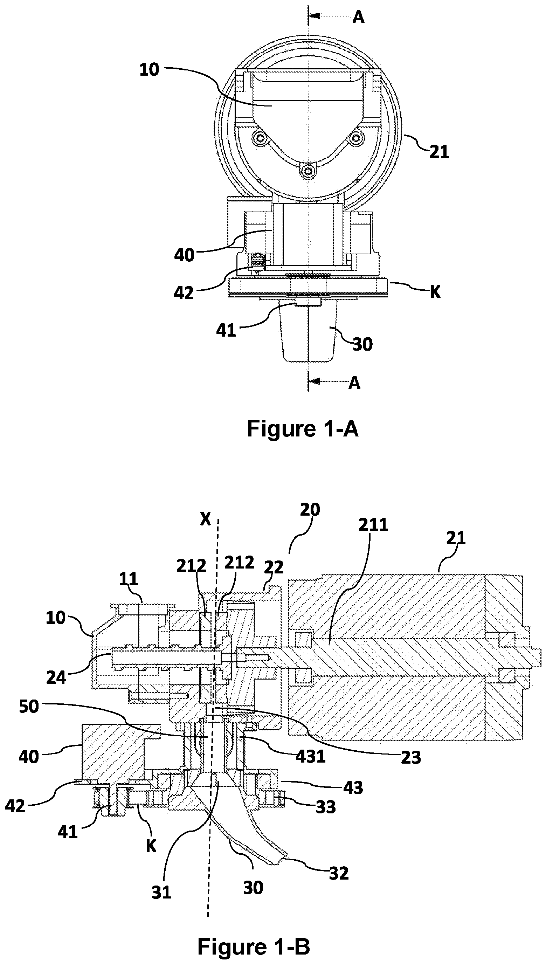

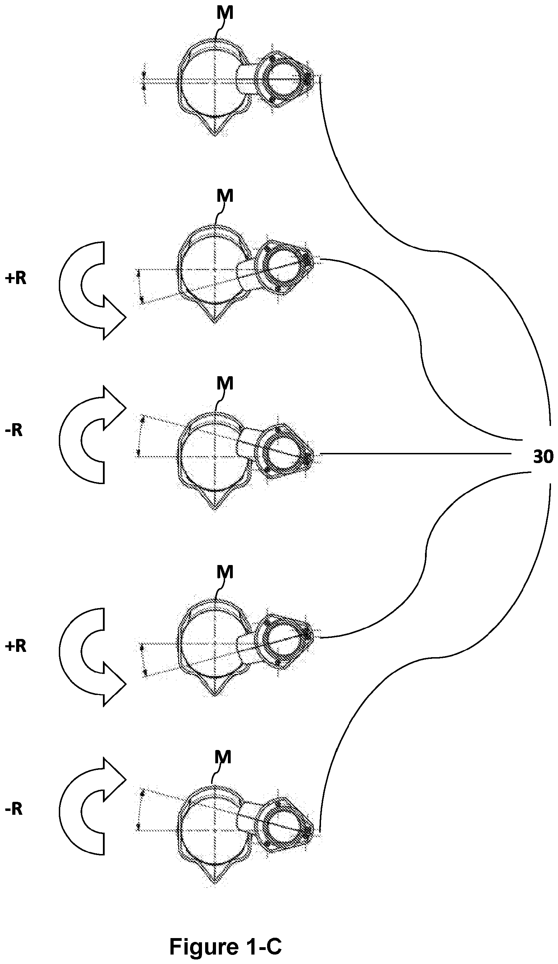

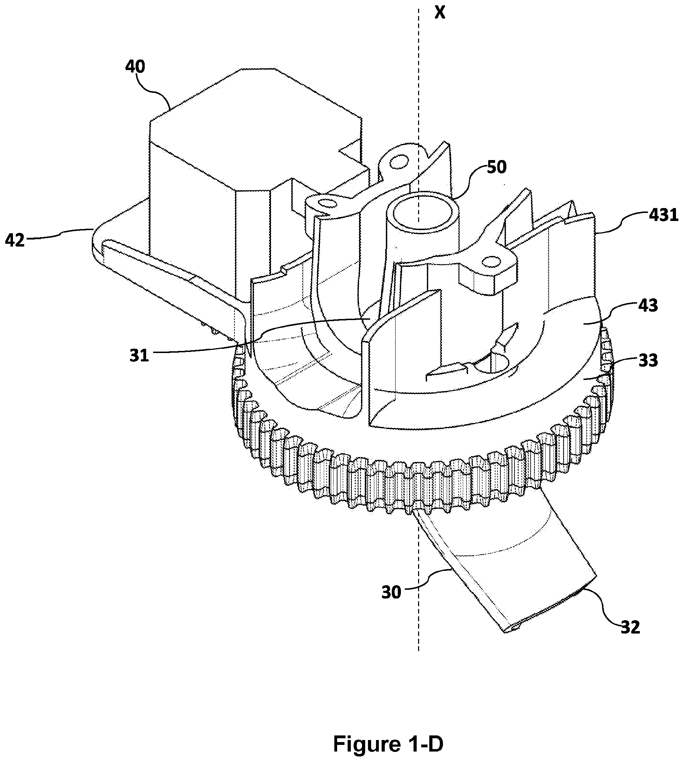

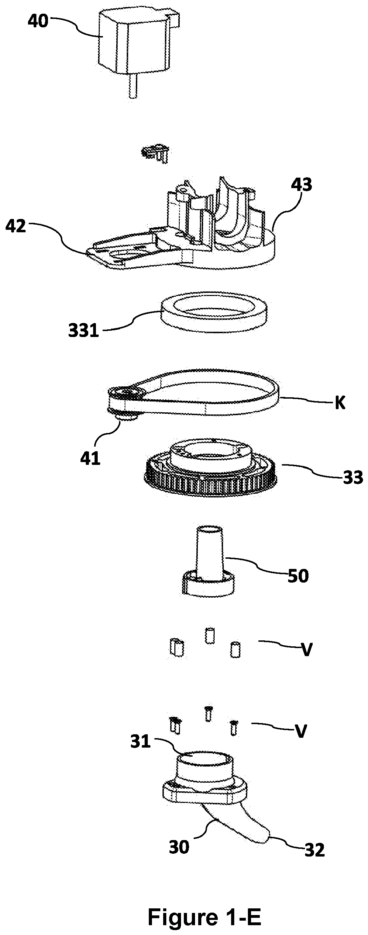

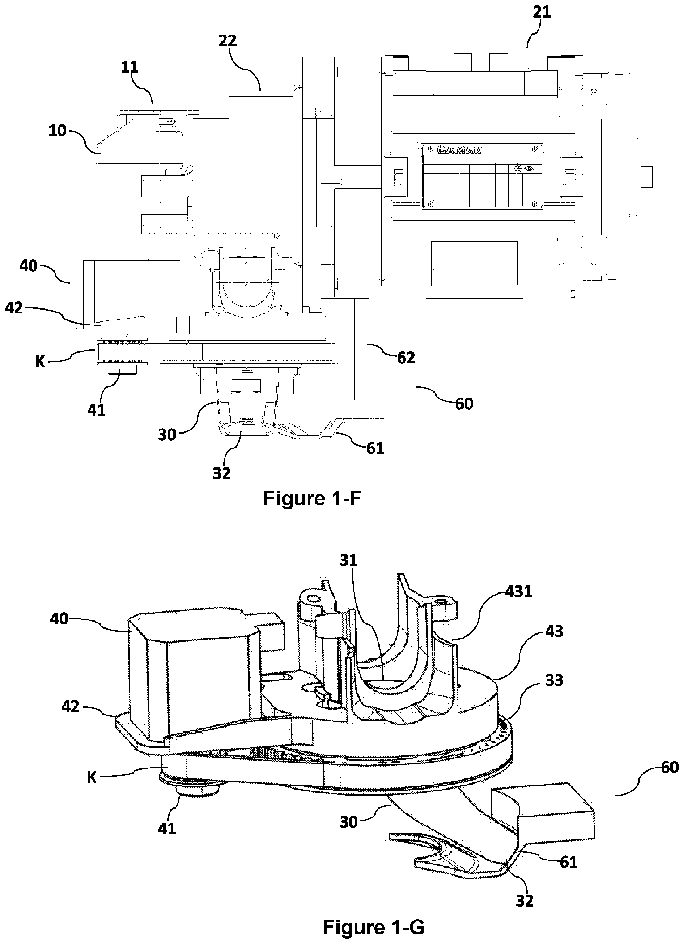

Figure 1 is the illustrative isometric view of an embodiment of the coffee grinder subject to the invention.
Figure 1.A is the rear view of the coffee grinder subject to the invention.
Figure 1.B is the A section of Figure 1.A.
Figure 1.C shows the sequential view of the flow channel.
Figure 1.D shows the isometric view of the drive element and the flow channel.
Figure 1.E shows the exploded view of the structure of Figure 1.C.
Figure 1.F is the side view of another embodiment of the coffee grinder subject to the invention. In this embodiment the, flow channel opening cleaning element has been shown.
Figure 1.G shows the isometric view of the drive element, flow channel and flow channel cleaning element.
Figure 2 is the isometric view of the coffee grinder adapted to be used in a coffee preparation machine and the secondary component chamber.

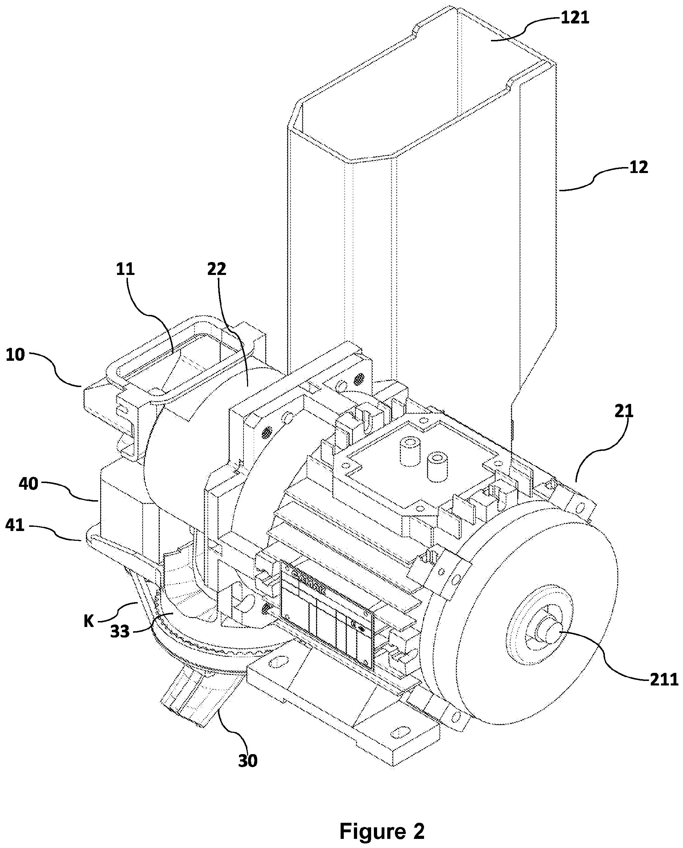

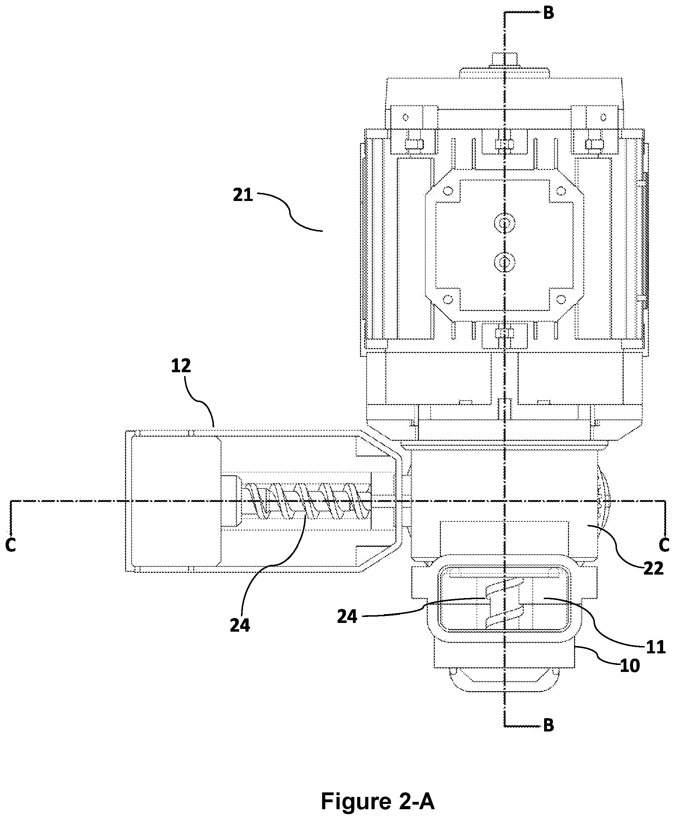

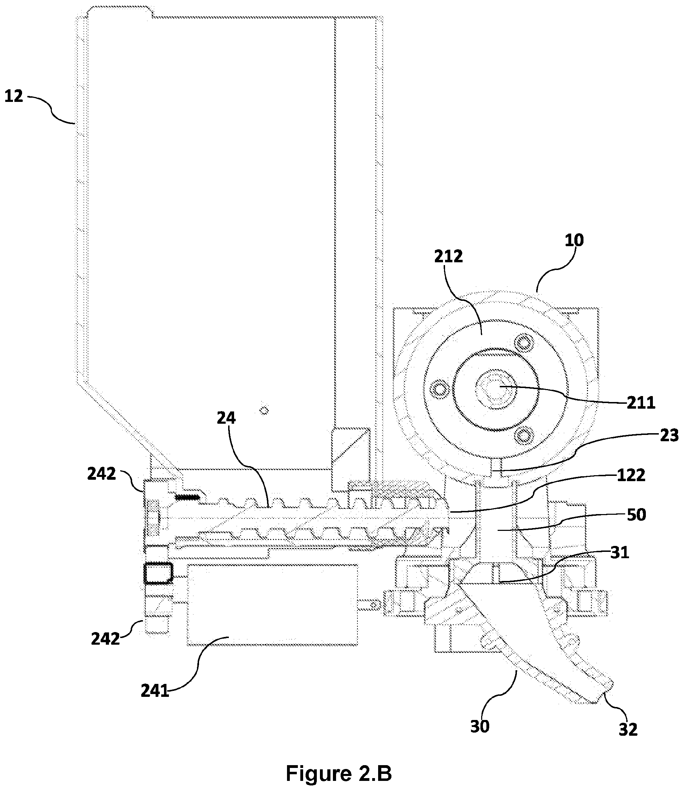

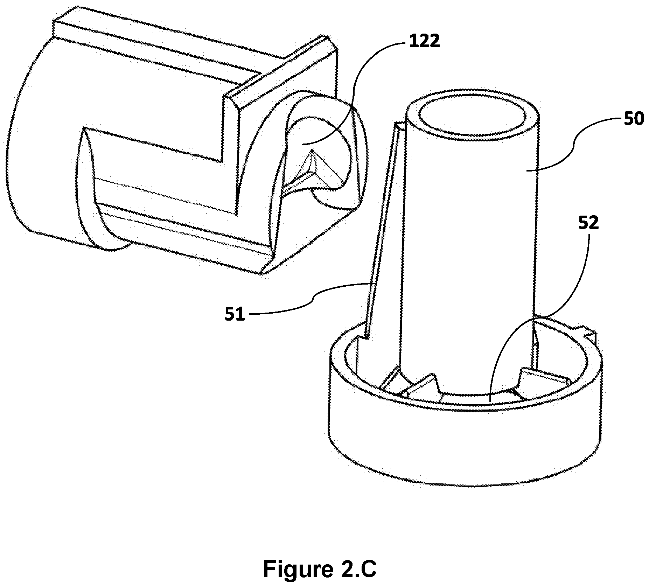

Figure 2.A shows the top view of the assembly shown in Figure 2.
Figure 2.B shows the C section of Figure 2.A.
Figure 2.C shows the isometric view of the secondary chamber outlet and the transfer channel configured to clean the outlet of the secondary chamber.

### DESCRIPTION OF THE REFERENCE NUMBERS SHOWN IN THE FIGURES

**10.** Chamber
**11.** Chamber inlet
**12.** Secondary chamber
**121.** Secondary chamber inlet
**122.** Secondary chamber outlet
**20.** Grinding mechanism
**21.** Drive element
**211.** Shaft
**212.** Blade
**22.** Blade cover
**23.** Grinder outlet
**24.** Carrier
**241.** Carrier drive element
**242.** Gear
**30.** Flow channel
**31.** Inlet
**32.** Outlet
**33.** Flow motion gear
**331.** Gasket
**40.** Motion control motor
**41.** Transfer gear
**42.** Drive element carrier plate
**43.** Flow channel carrier plate
**431.** Connection wall
**50.** Intermediate channel
**51.** Extension
**52.** Opening
**60.** Outlet cleaner
**61.** Cleaning surface
**62.** Cleaner carrier

**K.** Transfer element
**X.** Channel inlet axis
**R.** Radial direction
**M.** Housing
**V.** Screw

### DETAILED DESCRIPTION OF THE INVENTION

In this detailed description, the coffee grinding device subject to the invention and the coffee machine containing said device, has been described with illustrative examples without limiting the scope of the invention, only in order to provide a better understanding of the subject matter.

The invention is related to a particle carrier system that prevents the immobility or sticking of the particles onto the surface over which they are being carried and a Turkish coffee preparation device provided with said coffee grinder.

The invention is basically a coffee grinder, comprising a coffee grinding mechanism (20) having at least a grinder outlet (23) provided in order to grind coffee,
at least a flow channel (30) that directs the ground coffee particles conveyed from the outlet (23) of the grinder in order to transfer them to a container (M), and its inlet (31) positioned right below the grinder outlet (23) and connected to the grinder such that it can rotate according to the channel inlet axis (X) that passes through the center of said inlet, and
a motion control motor (40) that successively moves said flow channel (30) at the inlet axis (X) in opposite radial directions (R) in a suitable amount and frequency in order to prevent the sticking of the ground coffee particles located in the flow channel (30), to said flow channel (30).

Figure 1.A is the rear view of the coffee grinder and Figure 1.A is the rear view thereof. The coffee grinder comprises a chamber into which the coffee beans shall be added. The coffee beans are provided from the chamber inlet (11). Another larger chamber (10) is connected to the inlet (11) of the first chamber. The chamber (10) is connected to a grinder mechanism. The coffee particles that are transferred into the chamber (10) are brought to the desired size by being ground in said grinder mechanism (20).

As can be seen in the section shown in Figure 1.B, a carrier (24) has been provided inside the chamber (10) to carry the coffee beans towards the blades (212) that will be grinding the coffee beans.

The carrier (24) is provided as a threaded form. The shaft with threads thereon is driven by means of a drive element (21) that drives the blades (212) at the same time. As has already been mentioned before, the coffee beans are ground by a pair of blades (212). The blades (212) are preferably in circular form and are connected to a shaft (211) that is driven rotationally by the drive element (21). The distance between the blades (212) has been arranged so that they do not exceed 150 µm in order to provide suitable coffee particles. The blades (212) are surrounded by a blade cover (22).

A grinder outlet (23) has been provided at the bottom section of said blades (212) such that the ground coffee particles are discharged therein. A flow channel (30) has been provided beneath the grinder outlet (23) that is connected to the grinder outlet via an intermediate channel (50). The flow channel (30) can also be directly connected to the grinder outlet (23). Openings (52) have been formed around the intermediate channel (50) in order to ensure that the delivery of the coffee particles to the flow channel (30) is not restricted. The intermediate channel (50) has been provided such that it can rotate at the same axis together with the flow channel (30).

The flow channel (30) comprises an inlet (31) and an outlet (32) and by virtue of these, the channel suitably directs the coffee particles that have been provided at the grinder outlet (23). The flow channel (30) has been connected to the coffee grinder such that it can rotate according to a channel inlet axis (X) extending from the center of the inlet (31).

The flow channel (30) can be provided as an inclined and/or angular form in order to ensure that the coffee particles can easily flow.

The mentioned flow channel (30) is rotated bi-directionally at a certain distance around the channel inlet axis (X) by means of the motion control motor (40). Said motion has been shown in Figure 1.C. The drive element (40) moves the flow channel (30) in a radial direction (+R) and following this, it comes back to the starting point and rotates the channel in the opposite direction (-R) of the initial radial direction (+R). The motion at the radial direction (±R) oscillates the flow channel (30) and prevents the sticking of the coffee particles. Preferably the radial movement (±R) in both directions is equal. In an embodiment, said movement amount is equivalent to ±5°

The motion control motor (40) is a motor that can provide motion in both radial directions (R) in a controlled manner. The motor is preferably a servo motor. Alternatively, DC motors with encoder or stepper motors can also be selected as a motion control motor (40). The movement speed, acceleration and distance of the motion control motor (40) in the radial direction (R) can be adjusted. The coffee flow amount and speed, provided from the flow channel (30) can be adjusted using said variables.

A preferred embodiment of the invention comprises a control unit (not shown in the figures) in order to control at least one of the factors such as movement speed, frequency, acceleration and motion distance of said motion control motor (40). Accordingly, the necessary motion values in order to prevent the sticking of coffee particles can be applied according to the situation at hand. For example, said flow channel (30) will be able to be moved at a slower speed and frequency in said radial direction (R) for coffee types having larger particles than Turkish coffee.

Besides this, in the case that the grinder system comprises more one than one container (M) said control unit can control the motion control motor (40) which moves the flow channel (30) outlets (32) between said containers (M).

Moreover, because of said control, the control unit, is able to move the outlet (32) of flow channel (30) such that it comes into contact with the cleaning surface (61), which is to be described later on, or such that the cleaning surface (61) completely closes off the outlet of the flow channel.

A preferred embodiment of the invention comprises an input unit (not shown in the figures) in order to determine at least one of the factors such as movement speed, frequency, acceleration and motion distance of said motion control motor (40). Accordingly, the user is able to determine the related inputs.

The motion control motor (40) is not only able to provide motion to the flow channel directly, in the radial direction (R) under said conditions, but it may also provide motion via the flow motion gear (33), as shown in Figure 1.D.

Figure 1.E shows the exploded view of the structure of Figure 1.D. In this embodiment, said flow channel (30), is fixed to a flow motion gear (33) via the screws (V). The flow motion gear (33) is coupled to a flow channel carrier plate (43) by placing a gasket (331) thereon. Said coupling has been provided such that it does not restrict the rotation of the flow motion gear (33). Two openings have been formed at the hubs of the flow channel carrier plate (43) and the flow motion gear (33) in order to keep the grinder outlet (23) and the flow channel (30) relation open.

A drive element has been provided to the flow channel carrier plate (43) to be monolithic with the carrier plate (42). The drive element (40) has been positioned at the drive element carrier plate (42). A transfer gear (41) has been coupled to the drive element (40) shaft. The transfer gear (41) and the flow motion gear (33) have been connected to each other by means of a transfer element (K). The transfer element (K) can be selected as a gear belt.

The coffee grinder can comprise an outlet cleaner (60). Said structure has been shown in Figure 1.F and 1.G. The position in which the sticking of the coffee particles inside the flow channel is prevented is shown in Figure 1.F and the position where the outlet cleaner (60) cleans the outlet (32) of the flow channel (30) has been illustrated in Figure 1.G. The outlet cleaner (60), comprises at least a cleaning surface (61). The cleaning surface (61) is a fixed structure that is provided coplanar with the outlet (32).

The mentioned flow channel (30) is rotated around the channel inlet axis (X) by means of the motion control motor (40). The rotation motion is provided at a limited angle when they are provided to prevent the sticking of coffee particles. The cleaning surface (61) has been positioned such as to contact the outlet (32) of the flow channel (30) when it deviates from said limited angle. During contact, the accumulation formed at the outlet (32), for example, coffee particles or water droplets when coffee preparation process is being carried out, are removed by the cleaning surface (61).

The grinder subject to the invention can be used in a coffee preparation machine.

The coffee machine basically comprises a coffee grinder according to any of the claims 1-6, a water tank (not shown in the figures) and at least a water outlet configured to feed the container (M) in which the coffee particles that have been conveyed from the grinder and the water transfered from the water tank (not shown in the figures) are collected.

In Figure 2, an isometric view of a section of the coffee machine has been shown and in Figure 2.B, shows a section view according to the C axis in Figure 2.A. The section according to B axis has not been illustrated as it shall correlate with Figure 1.B.

In Figure 2, the coffee machine comprises a secondary chamber (12) besides the coffee grinder described above. The secondary chamber (12) enables the addition of secondary inputs to the coffee. The secondary chamber (12) has been provided to transfer the secondary inputs towards the secondary chamber inlet (121) and the flow channel (30) inlet.

In Figure 2.B, the secondary chamber (12) comprises a carrier (24) therein. The carrier (24) can have a threaded shaft form. The threaded shaft carries the secondary input provided to the secondary chamber (12) by rotating around its own axis. Said motion is carried out by means of a carrier drive element (241).

The carrier drive element (241) shaft is coupled to a gear and the threaded shaft is coupled to another gear. Both the gears that have been mentioned come into contact with each other to perform power transfer. The rotation provided by means of the carrier drive element (241) is transferred to the threaded shaft by means of said gears (242).

An intermediate channel (50) can be provided between the grinder outlet (23) and the flow channel (30). Openings (52) have been formed around the intermediate channel (50) in order to ensure that the delivery of the coffee particles to the flow channel (30) is not restricted. The intermediate channel (50) has been provided such that it can rotate at the same axis together with the flow channel (30).

In Figure 2.C, an extension (51) is provided at the outer surface of the intermediate channel (50). The extension (51) has been provided such that it shall contact the secondary chamber outlet (122), via the rotation motion of the intermediate channel (50). Accordingly, the accumulation of the inputs at the secondary chamber outlet (122) is cleaned and is transferred towards the flow channel (30).

The water tank mentioned beforehand may comprise a heating element in order to heat the water therein. Said heating element can be selected as a resistor.

Besides this, the coffee machine subject to the invention can comprise an internal container (M). The container (M) is positioned such that the coffee particles and the secondary inputs provided from the secondary chamber (12) are discharged via the flow channel (30) into said container. Following this, the water that is heated via the heating element in the water tank is discharged into the container (M) and therefore coffee can be prepared.

In another embodiment, the container (M) can comprise a heating element, preferably a resistor. After the inputs provided from the flow channel (30) and the water tank are transferred into the container (M), the heating element carries out the heating process and coffee is prepared.

After a sufficient amount of coffee is transferred into the container (M), the flow channel (30) returns back to its park position. The cleaning surface (61) that has been mentioned before is positioned and formed such that it can seal off the flow channel (30) opening. The entrance of humidity and steam into the flow channel (30) during the coffee preparation process is prevented following the closing of the flow channel (30) opening.

Moreover, the container (M) can contain a scale system. Therefore it can be controlled if suitable amounts of inputs have been transferred into the container (M) or not. In this embodiment not only, a secondary container (M) can be provided in order to prepare coffee and but also coffee can be prepared in the container comprising a scale system.

The protection scope of the invention has been defined in the claims attached and it shall not be limited to the embodiments disclosed for illustration purposes in the description.

## Claims

1. A coffee grinder that is used for grinding coffee, comprising a grinding mechanism (20) having at least a grinder outlet (23),
at least a flow channel (30) that directs the ground coffee particles conveyed from the outlet (23) of the grinder in order to transfer them to a container (M), and its inlet (31) positioned right below the grinder outlet (23) and connected to the grinder such that it can rotate according to the channel inlet axis (X) that passes through the center of said inlet, and
a motion control motor (40) that successively moves said flow channel (30) at the inlet axis (X) in opposite radial directions (R) in a suitable amount and frequency in order to prevent the sticking of the ground coffee particles located in the flow channel (30), to said flow channel (30).

2. A coffee grinder according to claim 1, **characterized by** comprising a control unit in order to control at least one of the factors such as movement speed, frequency, acceleration and motion distance of said motion control motor (40).

3. A coffee grinder according to claim 1, **characterized in that** the motion control motor (40) is a servo motor.

4. A coffee grinder according to claim 1, **characterized in that** the motion control motor (40) is a stepper motor.

5. A coffee grinder according to claim 1, **characterized in that** the motion control motor (40) is a DC motor with an encoder.

6. A coffee grinder according to claim 1, **characterized by** comprising a flow channel gear (33) provided to rotate according to the inlet axis (X), such that it is fixedly connected to the flow channel (30) and
a transfer element (K) that transfers the rotation motion provided by the motion control motor (40) to the flow channel gear (33).

7. A coffee grinder according to claim 1, **characterized in that** at least a part of said flow channel (30) is provided in an angular form.

8. A coffee grinder according to claim 1, **characterized in that** at least a part of said flow channel (30) is provided in an inclined form.

9. A coffee grinder according to claim 1, **characterized by** comprising a cleaning surface (61) that is positioned to be in contact with the outlet of said flow channel (30) and provided to be coplanar with said outlet.

10. A coffee grinder according to claim 9, **characterized in that** the cleaning surface (61) is formed to close the outlet (32) of the flow channel (30) from the outside to a flow channel.

11. A coffee grinder according to claim 9 or 10 **characterized in that** said motion control motor (40) and flow channel (30) are configured such that they allow the outlet (32) of the flow channel (30) to come into contact with the cleaning surface (61).

12. A coffee machine, comprising a coffee grinder according to any of the preceding claims, a water tank, at least a water outlet configured to feed the container (M) in which the coffee particles that have been conveyed from the grinder and the water transfered from the water tank are collected, and a heating element that heats up the container (M) in order to prepare the coffee.

13. A coffee machine according to claim 12, **characterized by** comprising at least a secondary chamber (12) in order to feed a secondary component to the inlet (31) of said flow channel (30) having a secondary chamber outlet (122).

14. A coffee machine according to claim 12, **characterized by** comprising an intermediate channel (50) located between said grinder outlet (23) and the flow channel (30), that are provided to rotate together with the flow channel (30), and an extension (51) at the outer surface of the intermediate channel (50) that comes in contact with the secondary chamber outlet (122) during the rotation of the flow channel (30) in order to clean the components remaining at the outlet area of the secondary chamber (122).

15. A coffee machine according to claim 12, **characterized by** comprising at least two containers (M) and it has been configured such that the motion control motor (40) can move the flow channel (30) outlet (32) between said containers (M).

## Patentansprüche

1. Kaffeemühle, die zum Mahlen von Kaffee verwendet wird, umfassend einen Mahlmechanismus (20) mit mindestens einem Mahlwerkausgang (23), mindestens einen Strömungskanal (30), der die vom Ausgang (23) des Mahlwerks geförderten gemahlenen Kaffeepartikel leitet, um sie in einen Behälter (M) zu überführen, und dessen Eingang (31) direkt unter dem Ausgang (23) des Mahlwerks positioniert und so mit dem Mahlwerk verbunden ist, dass er sich um die Eingangsachse (X) des Kanals drehen kann, die durch die Mitte des genannten Eingangs verläuft, und umfassend einen Bewegungssteuermotor (40), der den Strömungskanal (30) an der Eingangsachse (X) sukzessive in entgegengesetzte radiale Richtungen (R) in geeigneter Menge und Frequenz bewegt, um das Anhaften der gemahlenen Kaffeepartikel, die sich in dem Strömungskanal (30) befinden, an dem Strömungskanal (30) zu verhindern.

2. Kaffeemühle nach Anspruch 1, **dadurch gekennzeichnet, dass** sie eine Steuereinheit umfasst, um mindestens einen der Faktoren wie Bewegungsgeschwindigkeit, Frequenz, Beschleunigung und Bewegungsdistanz des Bewegungssteuerungsmotors (40) zu steuern.

3. Kaffeemühle nach Anspruch 1, **dadurch gekennzeichnet, dass** der Bewegungssteuerungsmotor (40) ein Servomotor ist.

4. Kaffeemühle nach Anspruch 1, **dadurch gekennzeichnet, dass** der Bewegungssteuerungsmotor (40) ein Schrittmotor ist.

5. Kaffeemühle nach Anspruch 1, **dadurch gekennzeichnet, dass** der Bewegungssteuerungsmotor (40) ein Gleichstrommotor mit einem Encoder ist.

6. Kaffeemühle nach Anspruch 1, **dadurch gekennzeichnet, dass** sie ein Strömungskanalgetriebe (33), das zur Drehung entlang der Eingangsachse (X) vorgesehen ist, so dass es fest mit dem Strömungskanal (30) verbunden ist, und ein Übertragungselement (K), das die von dem Bewegungssteuerungsmotor (40) vorgesehene Drehbewegung auf das Strömungskanalgetriebe (33) überträgt, umfasst.

7. Kaffeemühle nach Anspruch 1, **dadurch gekennzeichnet, dass** zumindest ein Teil des Strömungskanals (30) in einer abgewinkelten Form vorgesehen ist.

8. Kaffeemühle nach Anspruch 1, **dadurch gekennzeichnet, dass** zumindest ein Teil des Strömungskanals (30) in einer schrägen Form vorgesehen ist.

9. Kaffeemühle nach Anspruch 1, **dadurch gekennzeichnet, dass** sie eine Reinigungsfläche (61) umfasst, die so positioniert ist, dass sie in Kontakt mit dem Ausgang des Strömungskanals (30) steht und so vorgesehen ist, dass sie koplanar mit dem Ausgang ist.

10. Kaffeemühle nach Anspruch 9, **dadurch gekennzeichnet, dass** die Reinigungsfläche (61) so gebildet ist, dass sie den Ausgang (32) des Strömungskanals (30) von außen zu einem Strömungskanal verschließt.

11. Kaffeemühle nach Anspruch 9 oder 10, **dadurch gekennzeichnet, dass** der Bewegungssteuerungsmotor (40) und der Strömungskanal (30) derart konfiguriert sind, dass sie es ermöglichen, dass der Ausgang (32) des Strömungskanals (30) mit der Reinigungsfläche (61) in Kontakt kommt.

12. Kaffeemaschine, umfassend eine Kaffeemühle nach einem der vorhergehenden Ansprüche, einen Wassertank, mindestens einen Wasserausgang, der so konfiguriert ist, dass er den Behälter (M) speist, in dem die von der Mühle geförderten Kaffeepartikel und das aus dem Wassertank überführte Wasser gesammelt werden, und ein Heizelement, das den Behälter (M) erhitzt, um den Kaffee zuzubereiten.

13. Kaffeemaschine nach Anspruch 12, **dadurch gekennzeichnet, dass** sie mindestens eine Sekundärkammer (12) umfasst, um dem Eingang (31) des Strömungskanals (30) mit einem Sekundärkammerausgang (122) eine Sekundärkomponente zuzuführen.

14. Kaffeemaschine nach Anspruch 12, **dadurch gekennzeichnet, dass** sie einen Zwischenkanal (50) umfasst, der sich zwischen dem Mahlwerksausgang (23) und dem Strömungskanal (30) befindet, die so vorgesehen sind, dass sie sich zusammen mit dem Strömungskanal (30) drehen, und eine Verlängerung (51) an der Außenfläche des Zwischenkanals (50), die während der Drehung des Strömungskanals (30) mit dem Sekundärkammerausgang (122) in Kontakt kommt, um die am Bereich des Sekundärkammerausgangs (122) verbleibenden Komponenten zu reinigen.

15. Kaffeemaschine nach Anspruch 12, **dadurch gekennzeichnet, dass** sie mindestens zwei Behälter (M) umfasst und so konfiguriert worden ist, dass der Bewegungssteuerungsmotor (40) den Ausgang (32) des Strömungskanals (30) zwischen den Behältern (M) bewegen kann.

## Revendications

1. Moulin à café utilisé pour moudre le café, comprenant un mécanisme de mouture (20) ayant au moins une sortie de moulin (23), au moins un canal d'écoulement (30) qui dirige les particules de café moulu convoyées depuis la sortie (23) du moulin afin de les transférer vers un récipient (M), et son entrée (31) positionnée juste en dessous de la sortie du moulin (23) et connectée au moulin de telle sorte qu'elle puisse tourner selon l'axe d'entrée du canal (X) qui passe par le centre de ladite entrée, et un moteur de commande de mouvement (40) qui déplace successivement ledit canal d'écoulement (30) au niveau de l'axe d'entrée (X) dans des directions radiales opposées (R) dans une quantité et une fréquence appropriées afin d'empêcher le collage des particules de café moulu situées dans le canal d'écoulement (30), audit canal d'écoulement (30).

2. Moulin à café selon la revendication 1, **caractérisé en ce qu'**il comprend une unité de commande afin de commander au moins un des facteurs tels que la vitesse de mouvement, la fréquence, l'accélération et la distance de mouvement dudit moteur de commande de mouvement (40).

3. Moulin à café selon la revendication 1, **caractérisé en ce que** le moteur de commande de mouvement (40) est un servomoteur.

4. Moulin à café selon la revendication 1, **caractérisé en ce que** le moteur de commande de mouvement (40) est un moteur pas à pas.

5. Moulin à café selon la revendication 1, **caractérisé en ce que** le moteur de contrôle du mouvement (40) est un moteur CC avec un encodeur.

6. Moulin à café selon la revendication 1, **caractérisé en ce qu'**il comprend un engrenage de canal d'écoulement (33) prévu pour tourner selon l'axe d'entrée (X), de sorte qu'il est connecté de manière fixe au canal d'écoulement (30) et un élément de transfert (K) qui transfère le mouvement de rotation prévu par le moteur de commande de mouvement (40) à l'engrenage de canal d'écoulement (33).

7. Moulin à café selon la revendication 1, **caractérisé en ce qu'**au moins une partie dudit canal d'écoulement (30) est prévue sous une forme angulaire.

8. Moulin à café selon la revendication 1, **caractérisé en ce qu'**au moins une partie dudit canal d'écoulement (30) est prévue sous une forme inclinée.

9. Moulin à café selon la revendication 1, **caractérisé en ce qu'**il comprend une surface de nettoyage (61) qui est positionnée pour être en contact avec la sortie dudit canal d'écoulement (30) et prévue pour être coplanaire avec ladite sortie.

10. Moulin à café selon la revendication 9, **caractérisé en ce que** la surface de nettoyage (61) est formée pour fermer la sortie (32) du canal d'écoulement (30) de l'extérieur vers un canal d'écoulement.

11. Moulin à café selon la revendication 9 ou 10, **caractérisé en ce que** ledit moteur de commande de mouvement (40) et le canal d'écoulement (30) sont configurés de telle sorte qu'ils permettent à la sortie (32) du canal d'écoulement (30) d'entrer en contact avec la surface de nettoyage (61).

12. Machine à café, comprenant un moulin à café selon l'une quelconque des revendications précédentes, un réservoir d'eau, au moins une sortie d'eau configurée pour alimenter le récipient (M) dans lequel sont collectées les particules de café qui ont été convoyées depuis le moulin et l'eau transférée depuis le réservoir d'eau, et un élément chauffant qui chauffe le récipient (M) afin de préparer le café.

13. Machine à café selon la revendication 12, **caractérisée en ce qu'**elle comprend au moins une chambre secondaire (12) afin d'alimenter un composant secondaire à l'entrée (31) dudit canal d'écoulement (30) ayant une sortie de chambre secondaire (122).

14. Machine à café selon la revendication 12, **caractérisée en ce qu'**elle comprend un canal intermédiaire (50) situé entre ladite sortie de moulin (23) et le canal d'écoulement (30), qui sont prévus pour tourner ensemble avec le canal d'écoulement (30), et une extension (51) au niveau de la surface externe du canal intermédiaire (50) qui vient en contact avec la sortie de chambre secondaire (122) pendant la rotation du canal d'écoulement (30) afin de nettoyer les composants restant au niveau de la zone de sortie de la chambre secondaire (122).

15. Machine à café selon la revendication 12, **caractérisée en ce qu'**elle comprend au moins deux récipients (M) et qu'elle a été configurée de telle sorte que le moteur de commande de mouvement (40) peut déplacer la sortie (32) du canal d'écoulement (30) entre lesdits récipients (M).
